# EUROPÄISCHE PATENTSCHRIFT

(11) **EP 1 743 724 B1**
(45) Veröffentlichungstag und Bekanntmachung des Hinweises auf die Patenterteilung: **03.03.2010**
(21) Anmeldenummer: 06013063.0
(22) Anmeldetag: 24.06.2006
(51) Int. Cl.: B23G 1/46, B23D 77/02

(54) **Verfahren zur Herstellung einer formschlüssigen Verbindung zwischen einem Werkzeugeinsatz und einem Werkzeugträger eines rotierenden Werkzeugs**
Method for producing a form-locking coupling between a tool insert and a tool insert holder on a rotating tool
Methode de production d'une liaison de forme pour fixer un element d'outil amovible à son support dans un outil rotatif

(30) Priorität: 13.07.2005 DE 102005032653
(43) Veröffentlichungstag der Anmeldung: 17.01.2007
(73) Patentinhaber: Fette GmbH, 21493 Schwarzenbek (DE)
(72) Erfinder: Dehn, Gerhard, 23879 Mölln (DE); Gutsche, Christian, 21465 Wentdorf (DE); Kugolowski, Michael, 21502 Geesthacht (DE)
(74) Vertreter: Hauck Patent- und Rechtsanwälte

(56) Entgegenhaltungen:
- EP-A- 0 802 006
- WO-A-99/41513
- DE-A1- 10 136 293
- DE-A1- 19 628 428
- DE-C2- 19 848 045
- US-A- 4 722 642

## Beschreibung

Die Erfindung bezieht sich auf ein Verfahren zur Herstellung einer formschlüssigen Verbindung zwischen einem Werkzeugeinsatz und einem Werkzeugträger eines rotierenden Werkzeugs nach dem Oberbegriff des Anspruchs 1.

Aus DE 101 362 93 A1 ist ein Gewindeformer oder―bohrer mit einem Schaft und einem separatem Profilelement als Form- oder Schneidprofilabschnitt vorgesehen, das mittels einer Befestigungsvorrichtung zentrisch und unverdrehbar am Schaft befestigbar ist. Das Profilelement ist plattenförmig und hat einen Einlauf- bzw. Anschnittkegel. An den End-flächen des Schaftes und auf der zugekehrten Seitenfläche des Profilelements sind Vorsprünge und/oder Vertiefungen geformt, die formschlüssig ineinander greifen. Dadurch erfolgt eine automatische Zentrierung des Profilelements am Schaft, wenn das Profilelement am Schaft angesetzt wird. Außerdem erfolgt über die formschlüssige Verbindung eine Drehmomentübertragung vom Schaft auf das plattenförmige Profilelement. Das Profilelement wird mittels einer zentrischen Schraube in einer axialen Gewindebohrung am Schaft befestigt. Die Vorsprünge können von radialen Rippen und die Vertiefungen von radialen Nuten gebildet sein. Das Profilelement besteht aus einem Hartmetall, aus Keramik oder dergleichen. Der Schaft besteht zum Beispiel aus einem geeigneten Werkzeugstahl. Bei dem bekannten Gewindeformer oder -bohrer ist die Bereitstellung einer Vielzahl unterschiedlicher Profilelemente mit unterschiedlichen Durchmesser, unterschiedlicher Steigung usw. möglich zwecks Verbindung mit einem Einheitsschaft. Das Profilelement braucht daher allein aus einem geeigneten Hartwerkstoff zu bestehen. Der Materialeinsatz verringert sich daher erheblich.

Es ist üblich, Werkzeuge und Werkzeugeinsätze aus einem Hartstoff im Sinterverfahren aus einem Pulverpressling zu erzeugen. Dies bietet sich auch bei dem Profilelement des bekannten Werkzeugs an. Die Vertiefungen und Erhebungen für eine Sitzfläche um Werkzeugträger werden durch spangebende Bearbeitung hergestellt. Auch die sorgfältigste spangebende Bearbeitung kann das Auftreten von Maßunterschieden nicht vermeiden. Die Maßunterschiede beeinträchtigen jedoch die präzise Anordnung der Profilelemente am Werkzeugschaft und beeinflussen das Drehmomentübertragungsverhalten im Einsatz.

Aus EP 0 802 006A ist bekannt geworden, für Schneideinsätze eine Klemmung dadurch zu erzielen, dass mit Hilfe einer entsprechenden Kontur in Gestalt von Erhebungen die Kontaktflächen im Werkzeughalter plastisch verformt werden. Dabei wird sich zunutze gemacht, dass das Material, aus dem die Schneideinsätze gefertigt sind, eine größere Härte aufweist als das Material

des Werkzeughalters. Hierfür ist der Schneideinsatz mit erhabenen Elementen versehen, die sich in die Kontaktflächen des Werkzeughalters einformen.

Der Erfindung liegt die Aufgabe zugrunde, ein Verfahren zur Herstellung einer formschlüssigen Verbindung zwischen einem Werkzeugeinsatz und einem Werkzeugträger eines rotierenden Werkzeugs anzugeben, die spielfrei ist.

Diese Aufgabe wird durch die Merkmale des Patentanspruchs 1 gelöst.

Bei dem erfindungsgemäßen Verfahren wird ein gesinterter Preßling für den Werkzeugeinsatz als Prägestempel verwendet, mit dem die Sitzflächen im Werkzeugträger durch Pressformen hergestellt werden.

Beim Pressen und Sintern eines Werkzeugeinsatzes können durch entsprechende Ausbildung des Presswerkzeugs die Sitzflächen am Werkzeugeinsatz, die mit Sitzflächen des Werkzeugträgers zusammenwirken, mitgeformt werden. Dies macht sich das erfindungsgemäße Verfahren zunutze sowie die Tatsache, dass der Werkzeugeinsatz härter ist als der Werkzeugträger. Bei dem erfindungsgemäßen Verfahren wird mithin ein gesinterter Preßling aus einer Vielzahl von gleichen Preßlingen für Schneideinsätze als Prägestempel verwendet. Mit Hilfe des Prägestempels werden im Prägeverfahren die Sitzflächen in Werkzeugträger eingeprägt.

Das erfindungsgemäße Verfahren hat den Vorteil, dass ein Spiel zwischen den Sitzflächen des Werkzeugeinsatzes einerseits und des Werkzeugträgers andererseits nicht auftritt, da beide Sitzflächen von einer Ursprungsform herrühren, welche von dem Preßwerkzeug zur Herstellung der Preßlinge für die Werkzeugseinsätze gebildet ist. Herkömmlich werden Sitzflächen durch spangebendes Formen hergestellt, was ein Spiel naturgemäß nicht ausschließt. Abweichungen in diesem "Urwerkzeug" gegenüber vorgeschriebenen Abmessungen bilden sich in dem Preßling ab und werden von dem gesinterten Preßling wiederum auf den Werkzeugträger übertragen. Die gesinterten Preßlinge, aus denen Werkzeugeinsätze hergestellt werden, weisen ebenfalls die Abweichungen des Urwerkzeugs auf, so dass die Sitzflächen von Werkzeugeinsatz und Werkzeugträger genau, d.h. spielfrei, ineinander greifen.

Es versteht sich, dass der beschriebene Vorteil im wesentlichen nur dann erhalten wird, wenn sowohl der als Prägestempel eingesetzte gesinterte Preßling als auch die Werkzeugeinsätze mit den gleichen Werkzeugen der Pulverpresse hergestellt sind.

Die Erfindung kann überall dort eingesetzt werden, wo Werkzeugeinsätze formschlüssig mit einem Werkzeugträger zusammenwirken, z.B. bei Schneidplatten eines Fräswerkzeugs, die an Sitzflächen des Werkzeugträgers gehalten sind (z.B. DE 198 48 045 C2).

Nach einer Ausgestaltung der Erfindung ist vorgesehen, dass das erfindungsgemäße Verfahren auch für Werkzeuge mit einem Schaft als Werkzeugträger und mit einer Gewindeformer oder einem Schneidwerkzeug als Werkzeugeinsatz verwendet wird, wobei der Werkzeugeinsatz axial zentrisch zum Schaft angeordnet ist. Der Werkzeugeinsatz ist vorzugsweise aus Vollhartmaterial und der Werkzeugträger aus einem geeigneten Werkzeugstahl.

Nach einer Ausgestaltung der Erfindung werden die Sitzflächen mit prismatischen Vertiefungen und Erhöhungen geformt. Alternativ werden die Sitzflächen von einer Verzahnung an den Enden von Werkzeugeinsatz und Werkzeugträger geformt, wobei in Umfangsrichtung die Zahnscheitel und Zahngründe radial in gleichem Abstand voneinander angeordnet sind.

Die Sitzflächen sind bei dem oben beschriebenen bekannten Werkzeug derart, dass Werkzeugträger einerseits und Profilelement andererseits unterschiedliche Drehlagen zueinander einnehmen können. Da jedoch in Umfangsrichtung gesehen Abmessungsunterschiede vorliegen können, ist es nach einer weiteren Ausgestaltung der Erfindung vorteilhaft, wenn die Sitzflächen eine Indexierung aufweisen dergestalt, dass die Sitzflächen von Werkzeugeinsatz und Werkzeugträger nur in einer einzigen Drehlage relativ zueinander formschlüssig in Eingriff bringbar sind. Die Indexierung kann zum Beispiel dadurch erreicht werden, dass eine Erhöhung oder Vertiefung anders bemessen ist, als die übrigen, so dass auf diese Weise der Formschluss nur so hergestellt werden kann, dass die prismatischen Erhöhung und Vertiefung miteinander in Eingriff gelangen.

Das erfindungsgemäße Verfahren führt nicht nur zu einer größeren Genauigkeit in der Passung von Werkstückeinsatz und Werkstückträger, sondern ermöglicht ein äußerst wirtschaftliches Herstellungsverfahren. Ferner wird durch das Verfahren nach der Erfindung eine höhere Festigkeit an den Sitzflächen erzielt. Sie ist in jedem Falle größer als bei der Herstellung der Sitzflächen durch ein spangebendes Verfahren.

Die Erfindung soll nachfolgend anhand von Zeichnungen dargestellter Ausführungsbeispiele näher erläutert werden.
- Figur 1: zeigt einen gesinterten Preßling für die Durchführung des erfindungsgemäßen Verfahrens.
- Figur 2: zeigt einen Schnitt durch den Preßling nach Figur 1.
- Figur 3: zeigt einen Schnitt durch die Darstellung nach Figur 2 entlang der Linie 3-3.
- Figur 4: zeigt perspektivisch eine andere Ausführungsform eines Preßlings als Prägestempel zur Durchführung des erfindungsgemäßen Verfahrens.
- Figur 5: zeigt die Endansicht des Preßlings nach Figur 4.
- Figur 6: zeigt perspektivisch eine weitere Ausführungsform eines als Prägungsstempel verwendbaren Preßlings zur Durchführung des erfindungsgemäßen Verfahrens.
- Figur 7: zeigt die Endansicht des Preßlings nach Figur 6.
- Figur 8: zeigt perspektivisch ein Fräswerkzeug mit Schneidplatten.
- Figur 9: zeigt perspektivisch ein Gewindeformwerkzeug.

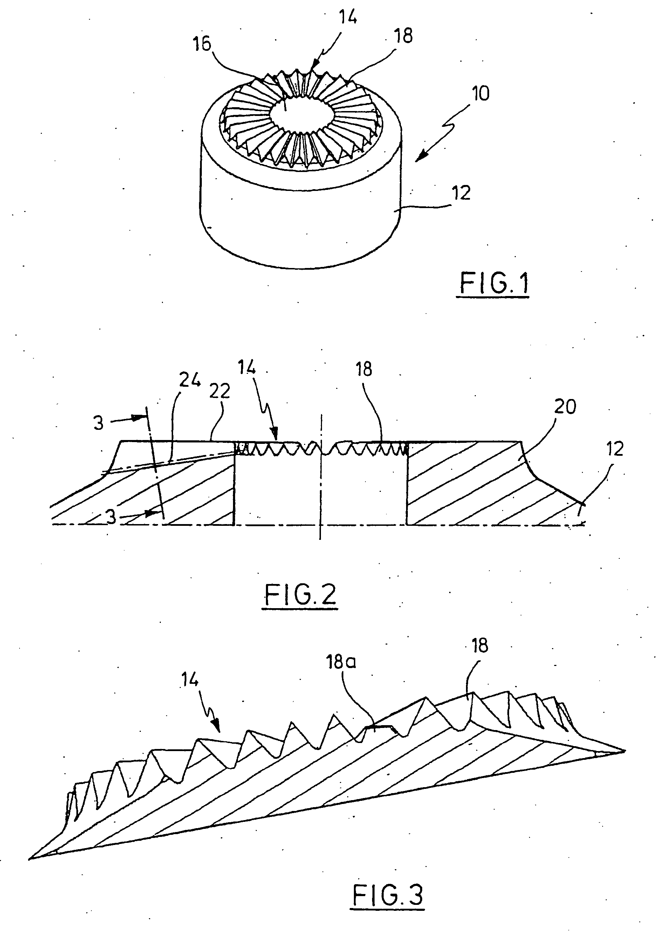

In Figur 1 ist ein gesinterter Preßling 10 zu erkennen, der einen zylindrischen Körper 12 aufweist, dessen eine Endfläche mit einer Zahnung 14 versehen ist. Der Preßling 10 ist aus einem Hartmetall oder aus Werkzeugkeramik geformt und dient zum Beispiel als Profilelement für einen Gewindeformer gemäß der oben beschriebenen DE 101 36 293 Al. Zu diesem Zweck wir ein Preßlingskörper, entsprechend dem Preßling nach Figur 1 spangebend verarbeitet, um mit einem geeigneten Werkzeugprofil (Schneidkanten, Nuten und dergleichen) versehen zu werden. Bei dem nachfolgend beschriebenen Verfahren wird jedoch bei dem Preßling 10 eine solche Bearbeitung nicht vorgenommen, vielmehr bleibt er unbearbeitet und wird als Prägestempel für ein Prägeverfahren genommen.

Der Preßling 10 wird, wie bekannt, in einer Pulverpresse mittels eines Ober- und Unterstempels, die mit einer Matrize zusammenwirken, hergestellt. Die Zahnung 14 wird üblicherweise durch den entsprechend geformten Unterstempel hergestellt. Der Oberstempel wirkt auf der gegenüber liegenden Seite und hat zum Beispiel eine ebene Stirnfläche. Außerdem wird eine axiale Kreisbohrung 16 geformt.

Es ist nicht erforderlich, dass der zylindrische Körper 12 die gleiche Höhe hat wie die Preßlinge, die anschließend zu Profilelementen bzw. Schneideinsätzen einer spangebenden Formung unterworfen werden. Es hängt allein von der Pulvermenge und dem Weg des Oberstempels ab, wie hoch bzw. lang der zylindrische Körper 12 ist.

Im Fall der Figuren 1 bis 3 wird eine spezielle Zahnung 14 in dem Preßling 10 geformt. Einzelne Zähne 18 sind mit ihrem radialen Scheitel in gleichmäßigem Umfangsabstand voneinander angeordnet. Der Grund in den Zahnlücken wird ebenfalls nur von einer Linie gebildet, wie sich aus der Gesamtschau der Figuren 1 bis 3 ergibt. Die Zahnung 14 ist in einem etwas erhabenen Abschnitt 20 des Körpers 12 geformt, wobei die Scheitellinien 22 in einer Ebene senkrecht zur Achse des zylindrischen Körpers 12 liegen, während die Grundlinien 24 in einem kleinen Winkel dazu geneigt sind, wie sich aus Figur 2 ergibt. Es liegt mithin eine Stimverzahnung 14 vor.

Mit Hilfe des Preßlings 10 ist ein Prägestempel gewonnen, mit dessen Hilfe eine komplementäre Zahnung in einen Werkzeugträger, beispielsweise das Ende eines Werkzeugschaftes eingeformt wird. Ein derartiger Werkzeugschaft mit einer komplementären Prägung ist hier nicht dargestellt. Ein Werkzeugeinsatz, beispielsweise ein Profilelement gemäß dem oben beschriebenen Gewindeformer, kann daher mit seiner Zahnung, welche der Zahnung 14 gleicht, formschlüssig mit der Zahnung des Werkzeugträgers, insbesondere des Werkzeugschaftes in Eingriff treten. Da die Zahnung des Prägestempels mit der gleichen Pulverpresse hergestellt wird, wie die Zahnung der Werkzeugeinsätze, besteht zwischen den Zahnungen von Werkzeugeinsatz und Werkzeugträger eine hohe Maß- und Formgenauigkeit. Mithin kann ein großes Drehmoment übertragen werden, insbesondere auch durch die in den Figuren 1 bis 3 dargestellte Form der Verzahnung.

Wie aus Figur 3 zu erkennen, ist ein Zahn 18 a abgeflacht geformt. Mithin ergibt sich bei der Ausformung des Gegenprofils im Werkzeugträger eine komplementäre Vertiefung. Es ist somit nur möglich, die Profile von Werkzeugeinsatz und Werkzeugträger formschlüssig zusammen zu bringen, wenn der Zahn 18 a zu der komplementären Vertiefung von 18 a ausgerichtet ist. Die Indexierung sorgt mithin dafür, dass Werkzeugeinsatz und Werkzeugträger stets in der richtigen Drehlage zueinander formschlüssig verbunden werden.

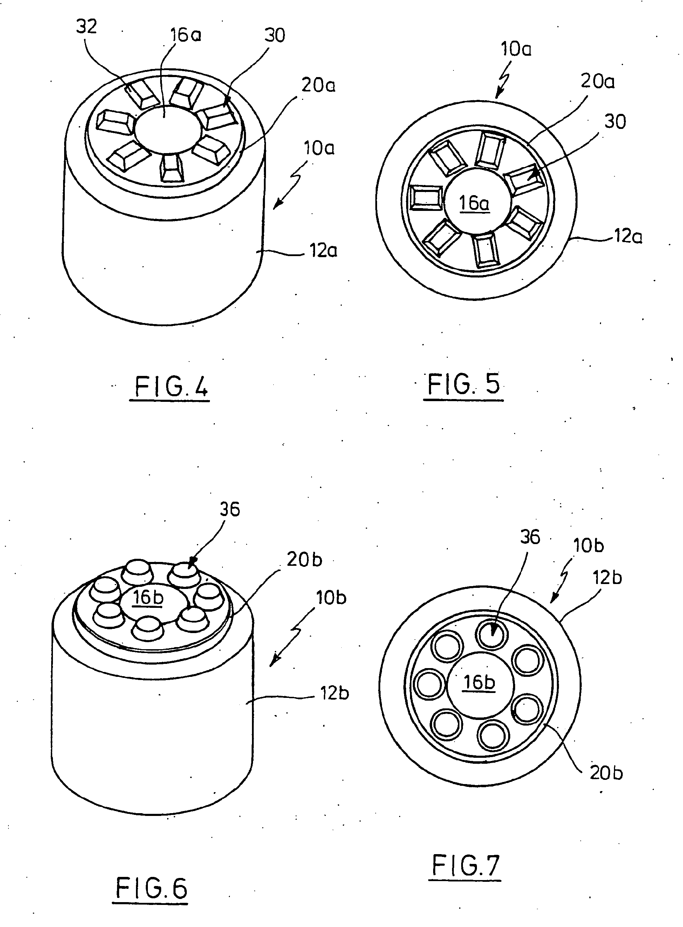

In den Figuren 4 bis 7 sind zwei verschiedene Ausführungsformen für Sitzflächenausbildungen für eine formschlüssige Verbindung von Werkzeugeinsatz und Werkzeugträger dargestellt. In den Figuren 4 und 5 ist ein Preßling 10 a zu erkennen mit einem zylindrischen Körper 12 a und einer Durchbohrung 16 a. Man erkennt, dass an einem erhabenen Abschnitt 20 a an einem Ende des zylindrischen Körpers 12 a eine Reihe von prismatischen Erhebungen 30 geformt ist. Die prismatischen Erhebungen 30 sind radial angeordnet und in gleichmäßigem Umfangsabstand voneinander aufgereiht. Sie haben schräge Seitenflächen 32, wodurch die Erhebungen 30 sich zum freien Ende hin verjüngen.

Bei der Ausführungsform nach den Figuren 6 und 7 sind auf einer Erhebung 20 b des zylindrischen Körpers 12 b eine Reihe von runden am oberen Ende abgeflachter Noppen 36 geformt. Die Noppen 36 sind auf einem Kreis koaxial zur Achse des zylindrischen Körpers 12 b angeordnet und in gleichmäßigem Umfangsabstand voneinander aufgereiht. Bei Verwendung als Prägestempel wird von dem Werkzeugträger ein komplementäres Profil erzeugt, wobei dann bei einer Verbindung der Werkzeugeinsätze mit dem Werkzeugträger ein formschlüssiges Eingreifen der Profile gewährleistet ist. Auch bei den Ausführungsformen nach den Figuren 4 bis 7 ist eine Indexierung, wie sie oben beschrieben wurde, zweckmäßig, das heißt eine Verbindung von Werkzeugeinsatz und Werkzeugträger ist nur in einer vorgegebenen relativen Drehlage der beiden Teile zueinander möglich. So kann beispielsweise eine prismatische Erhöhung 30 oder ein Noppen 36 von geringerer oder größerer Höhe als die übrigen geformt werden.

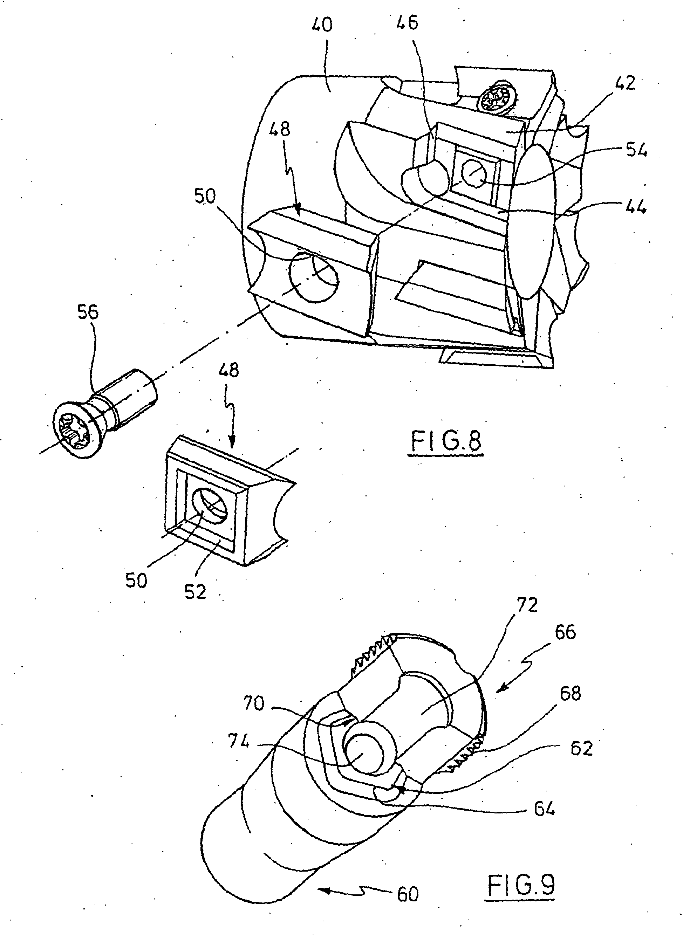

In Figur 8 ist ein Fräswerkzeug gezeigt, mit einem schaftartigen Fräskörper 40, der an einem Ende in Umfangsabständen Kammern aufweist, welche Sitzflächen 42, 44, 46 aufweist für Schneidplatten 48. Die Schneidplatten haben eine Durchbohrung 50 und an der Rückseite einen rechteckigen Rahmen 52, der mit den Sitzflächen 42 bis 46 zusammenwirkt. Im Grund der Kammern ist eine Gewindebohrung 54 geformt, in welche eine Befestigungsschraube 56 eingeschraubt wird, wenn mit ihrer Hilfe die Schneidplatten 48 der Kammern befestigt werden.

Auf die Ausgestaltung der Schneidplatten 48 soll im Einzelnen nicht eingegangen werden. Sie bestehen aus sehr hartem Material, beispielsweise Hartmetall, und mit Hilfe einer gesinterten Schneidplatte 48 werden im Träger 40 die Sitzflächen 42 bis 46 geformt. Eine spangebende Bearbeitung entfällt mithin. Zwischen den Schneidplatten 48 und den Sitzflächen ist ein paßgenauer Formschluß erzielt.

In Figur 9 ist ein Werkzeugträger in Form eines Schaftes 60 zu erkennen, der stirnseitig eine prismatische Erhebung 62 von fünfeckiger Kontur mit Schrägflächen 64 aufweist. Ein Profilelement 66 mit einem Gewindeformprofil 68 weist an einem Stirnende ein zur prismatischen Erhebung 62 komplementäres Profil 70 auf, wodurch Profilelement 66 und Schaft 60 formschlüssig ineinander greifen. Das Profilelement 66 weist eine zentrische Durchbohrung 72 auf, die mit einer axialen Bohrung 74 des Schaftes 60 ausgerichtet ist. Mit Hilfe einer nicht dargestellten Schraube kann das Profilelement 66 gegen den Schaft 60 fest angezogen werden.

Das Profil an der Stirnseite des Schaftes 60 kann wiederum mit dem Profil des Profilelements 66 in der bereits beschriebenen Art und Weise durch Prägen oder Preßformen hergestellt werden.

## Patentansprüche

1. Verfahren zur Herstellung einer formschlüssigen Verbindung zwischen einem Werkzeugeinsatz und einem Werkzeugträger eines rotierend angetriebenen Werkzeugs, wobei der Werkzeugträger Sitzflächen aufweist, welche den Werkzeugeinsatz formschlüssig aufnehmen und über die Kräfte oder Drehmomente auf den Werkzeugeinsatz übertragen werden, wobei der Werkzeugeinsatz aus einem härteren Material als der Werkzeugträger durch Sintern eines Pulverpreßlings hergestellt wird, **dadurch gekennzeichnet, dass** ein gesinterter Preßling (10, 10a, 10b) für den Werkzeugeinsatz als Prägestempel verwendet wird, mit dem die Sitzflächen in einer Vielzahl von Werkzeugträgern (40, 60) durch Prägen oder Preßformen hergestellt werden.

2. Verfahren nach Anspruch 1, **dadurch gekennzeichnet, dass** die Sitzflächen (42, 44, 46) für mindestens einen Werkzeugeinsatz (48) am Umfang eines Werkzeugträgers (40) geformt werden.

3. Verfahren nach Anspruch 1, **dadurch gekennzeichnet, dass** die Sitzflächen (62, 64) für einen Werkzeugeinsatz (66) axial und zentrisch stirnseitig am Werkzeugträger (60) geformt werden.

4. Verfahren nach einem der Ansprüche 1 und 3, **dadurch gekennzeichnet, dass** der Werkzeugeinsatz aus Vollhartmetall und der Werkzeugträger aus Werkzeugstahl hergestellt ist.

5. Verfahren nach einem der Ansprüche 3 oder 4, **dadurch gekennzeichnet, dass** die Sitzfläche (62) mit prismatischen Erhebungen oder Vertiefungen geformt wird.

6. Verfahren nach einem der Ansprüche 3 bis 5, **dadurch gekennzeichnet, dass** die Sitzflächen mit einer Verzahnung an den Enden von Werkzeugeinsatz und Werkzeugträger geformt werden, wobei die in Umfangsrichtung gleichmäßig beabstandeten Zahnscheitel und Zahngründe radial angeordnet sind.

7. Verfahren nach einem der Ansprüche 1 bis 6, **dadurch gekennzeichnet, dass** bei rotationssymmetrisch angeordneten Sitzflächen der Prägestempel eine Indexierung aufweist dergestalt, dass die Sitzflächen von Werkzeugeinsatz und Werkzeugträger nur in einer einzigen Drehlage relativ zueinander formschlüssig in Eingriff bringbar sind.

## Claims

1. Method for making a form-fitting connection between a tool insert and a tool holder of a rotatingly driven tool, wherein the tool holder has bearing surfaces which form-fittingly receive the tool insert and by which forces or torques are transmitted to the tool insert, wherein the tool insert is made from a material harder than that of the tool holder by sintering a green compact of powder, **characterised in that** a sintered green compact (10, 10a, 10b) for the tool insert is used as a hob, by which the bearing surfaces in a multiplicity of tool holders (40, 60) are manufactured by stamping or press-forming.

2. Method according to claim 1, **characterised in that** the bearing surfaces (42, 44, 46) for at least one tool insert (48) are formed on the perimeter of a tool holder (40).

3. Method according to claim 1, **characterised in that** the bearing surfaces (62, 64) for a tool insert (66) are formed axisymmetrically and centrical on the face of the tool holder (60).

4. Method according to any one of claims 1 and 3, **characterised in that** the tool insert is made from solid hard metal and the tool holder from tool steel.

5. Method according to any one of claims 3 or 4, **characterised in that** the bearing surface (62) is formed with prismatic high spots or pits.

6. Method according to any one of claims 3 to 5, **characterised in that** the bearing surfaces are formed with gear teeth on the ends of tool insert and tool holder, wherein the crowns and bottoms of the teeth, uniformly spaced apart in the perimeter direction, are arranged radially.

7. Method according to any one of claims 1 to 6, **characterised in that** while the bearing surfaces are arranged rotationally symmetrical, the hob has an indexing such that the bearing surfaces of tool insert and tool holder can be brought into form-fitting engagement in only one turning position with respect to each other.

## Revendications

1. Méthode de production d'une liaison de forme pour fixer un élément d'outil amovible à son support dans un outil entraîné en rotation, dans laquelle le support d'outil présente des surfaces d'appui qui reçoivent l'élément d'outil amovible par liaison de forme et par lesquelles des forces ou couples de rotation sont transmis à l'élément d'outil amovible, dans laquelle l'élément d'outil amovible est fabriqué en un matériau plus dur que le support d'outil par frittage d'un comprimé de poudre, **caractérisée en ce qu'**un comprimé fritté (10, 10a, 10b) est utilisé pour l'élément d'outil amovible en tant que poinçon avec lequel les surfaces d'appui dans une multiplicité de supports d'outils (40, 60) sont fabriquées par matriçage ou moulage par compression.

2. Méthode selon la revendication 1, **caractérisée en ce que** les surfaces d'appui (42, 44, 46) pour au moins un élément d'outil amovible (48) sont formées sur la périphérie d'un support d'outil (40).

3. Méthode selon la revendication 1, **caractérisée en ce que** les surfaces d'appui (62, 64) pour un élément d'outil amovible (66) sont formées sur le support d'outil (60) côté frontal de manière axiale et centrée.

4. Méthode selon l'une des revendications 1 et 3, **caractérisée en ce que** l'élément d'outil amovible est fabriqué en carbure monobloc et le support d'outil est fabriqué en acier à outil.

5. Méthode selon l'une des revendications 3 ou 4, **caractérisée en ce que** la surface d'appui (62) est formée avec des saillies ou enfoncements prismatiques.

6. Méthode selon l'une des revendications 3 à 5, **caractérisée en ce que** les surfaces d'appui sont formées avec un endentement aux extrémités de l'élément d'outil amovible et du support d'outil, dans laquelle les sommets de dent et fonds de dent espacés de manière régulière en direction périphérique sont disposés radialement.

7. Méthode selon l'une des revendications 1 à 6, **caractérisée en ce que** dans le cas de surfaces d'appui disposées en symétrie de révolution, le poinçon présente une indexation de telle sorte que les surfaces d'appui de l'élément d'outil amovible et du support d'outil ne peuvent être amenées en prise par liaison de forme que dans une seule position de rotation les unes par rapport aux autres.
